# EUROPEAN PATENT SPECIFICATION

(11) **EP 1 415 690 B1**
(45) Date of publication and mention of the grant of the patent: **10.09.2008**
(21) Application number: 03025015.3
(22) Date of filing: 30.10.2003
(51) Int. Cl.: A63F 13/08

(54) **Gaming machine**
Spielautomat
Machine de jeu

(30) Priority: 30.10.2002 JP 2002316726
(43) Date of publication of application: 06.05.2004
(73) Proprietor: Aruze Corp., Tokyo 135-0063 (JP)
(72) Inventor: Nagano, Hiroyuki, Tokyo, 135-0063 (JP)
(74) Representative: TER MEER - STEINMEISTER & PARTNER GbR

(56) References cited:
- EP-A- 1 226 853
- US-A1- 2001 031 658
- US-B1- 6 461 239
- PATENT ABSTRACTS OF JAPAN vol. 2002, no. 03, 3 April 2002 (2002-04-03) -& JP 2001 309277 A (SANYO ELECTRIC CO LTD), 2 November 2001 (2001-11-02)

## Description

### BACKGROUND OF THE INVENTION

### FIELD OF THE INVENTION

The present invention relates to a gaming machine.

### RELATED ART

Many gaming machines for entertaining players are installed in a gaming place such as a game arcade and a casino. A typical one of the gaming machines such as slot machines, video poker machines, and so on is arranged in a cabinet which has a vertically long shape.

Each gaming machine has such a shape since the gaming machine is designed for one person and more gaming machines can be installed in a predetermined space as long as the gaming machine is wide enough to have a player not feel clamped by his neighboring players.

As shown in Japanese Unexamined Patent Application Publication No. 2001-246044, a gaming machine of a vertically long shape is composed of a monitor or another display device, a control panel for a player to operate in a game, a coin payout opening, speakers, etc., which are disposed on a front face of a vertically long shape.

Each of the above-mentioned devices is positioned at a desirable location for itself. For example, the monitor is positioned at a location close to the eye level of the player and the control panel is positioned at a location where the player readily operate with his hands.

However, the speakers are not necessarily positioned at the most desirable position.

The most desirable position for the speakers might be a position close to the player's ears. The position close to the player's ears might be a position substantially as high as the player's eye level. And at this position of the eye level, the monitor or another display device is installed so that it occupies almost the entire width of the gaming machine.

It is also desirable that the display section occupies nearly the entire width of the gaming machine since wider display section might be more effective to attract the player though narrower width of the gaming machine might be more preferable as mentioned above.

Thus, a typical gaming machine tends to have speakers positioned near the coin payout opening, although the speakers are far from the player's ears. Therefore, it might be hard for the player to hear sound of the gaming machine with which the player plays a game.

The EP 1 226 853 discloses a sound control device having a display device and a set of loudspeakers. The loudspeakers are disposed on the left and right side of the display device.

The JP 2001-309277 discloses a mounting structure of a TV loudspeaker. It is disclosed to mount the speaker of a TV set on an elastic material between an inner surface of the TV cabinet and the open side of the loudspeaker.

The US 2001/0031658 discloses a gaming maching having a display device and loudspeakers. Loudspeakers are arranged at the bottom of the gaming machine for outputting the sound generated by the game.

### SUMMARY OF THE INVENTION

According to the present invention, it is an object to provide a gaming machine having speakers positioned so as for a player to hear sound readily while the gaming machine and the display section remain substantially in the same width.

In an aspect of the present invention, a gaming machine comprising a display device and a sound generating devices is characterized in that the sound generating devices are positioned on left and right sides of the display device. The display device may be wide enough for attracting the player.

More specifically, according to the present invention, the following is provided.

A gaming machine comprising a display device having a display screen showing an image concerning a game; sound generating devices generating sound according to the game; a cabinet having an opening on a front face thereof such that the display screen of the display device is viewed through the opening from an outside of the cabinet; wherein the display device and the sound generating devices are integrated in the cabinet, wherein the sound generating devices are spaced apart from the front face of the cabinet, the front face comprises sound transmitting holes being disposed on the left and right side of the display device for emitting sound generated by the sound generating devices; sound transmitting passages are incorporated in the cabinet extending from the respective sound generating devices to the sound transmitting holes for guiding the sound, wherein the sound transmitting passage is formed and enclosed by one or more plates, at least one plate is fixed to the cabinet.

With the above-described aspect of the invention, each sound guider having a sound transmitting passage for guiding sound from a sound generating device to a sound transmitting hole is provided on either or both sides of the display device being disposed inside the cabinet. Thus, a player can readily view an image concerning a game that is shown on the display device and yet hear sound readily to enjoy audio attractions as if the player were in the game since the sound transmitting holes are positioned such that sound readily reaches the player's left and right ears. Here, the sound transmitting hole, by way of example, may include a simple opening, a sectioned opening, and other types or shapes of opening. More specifically, the sound transmitting hole may include, for example, a speaker grill. The sound transmitting hole may also be covered with sound transmitting material such as a cloth, which may keep dust from the hole. This configuration is extremely effective especially in a gaming place filled with loud noise caused by many installed gaming machines.
With a prior-gaming machine, a monitor or other display devices occupy the entire width of the gaming machine. Therefore, speakers or the like are not installed on either side of the monitor, which is somewhat closer to the player's ears. Therefore, the player may not enjoy very lively audio attractions in addition to difficulties in hearing the sound from his gaming machine in the gaming place because of loud noise by other gaming machines.
Thus, in an aspect according to the present invention, the sound can be heard readily and audio attractions that may cause the player to feel he were in the game can be realized.
(2) The gaming machine according to (1) is characterized in that the sound transmitting holes are disposed in sound transmitting sections, each of which has a vertically long shape, and that the sound transmitting sections are provided on left and right sides of the opening on the front face of the cabinet.
   In another aspect according to the invention, since the transmitting hole in the sound transmitting section is formed in a vertically long shape, referring to a shape longer in the vertical direction than in the left/right direction, the transmitting hole is provided in a region that is narrow and long in the vertical direction. Even when the speaker is installed on either or both sides of the monitor or the display device, the width of the monitor or the display device showing gaming situations of the game being played can retain the adequate width in consideration of the width of the gaming machine.
   As mentioned above, although it is desirable for the player if speakers and sound transmitting holes are installed on both sides of the display device, it is not desirable for the player if the width of the display device is made too narrow because of the widths of the speakers and transmitting holes installed on both sides of the display device in the lateral direction.
   Thus, the width of the display device can be made adequate in consideration of the width of the gaming machine so that the gaming machine may remain in the same width.
(3) The gaming machine according to (1) or (2) is characterized in that each of the sound transmitting passages comprises a substantially constant width in a horizontal direction and an increasing length in a vertical direction as the each of the sound transmitting passages extends towards each of the sound transmitting holes.
   In another aspect according to the invention, the sound transmitting passage has a shape with a substantially constant width in the horizontal direction and an increasing length in the vertical direction as the sound travels from the sound generating device to the sound transmitting hole. The sound transmitting hole is enlarged efficiently.
(4) The gaming machine according to any one from (1) to (3) is characterized in that the sound transmitting passages are fixed to the cabinet.

In another aspect according to the invention, the sound transmitting passage is preferably fixed firmly to the cabinet. The sound transmitting passage is formed and enclosed by one or more plates or walls, which may be fixed to the cabinet with screws or other kinds of fasteners so that the plates or walls may not cause uncomfortable noise such as a chatter and a creak.

Further features of the invention, its nature and various advantages will be more apparent from the accompanying drawings and the following detailed description of the invention.

### BRIEF DESCRIPTION OF THE DRAWINGS

Fig. 1 is a front view of a gaming machine according to an embodiment of the present invention.
Fig. 2 is an enlarged partial front view of the gaming machine with a door opened so as to show an display device according to the embodiment of the present invention.
Fig. 3 is an exploded perspective assembly diagram of a main speaker body and a sound guider on the left side according to the embodiment of the present invention.
Fig. 4 is an exploded perspective assembly diagram of a main speaker body and a sound guider on the right side according to the embodiment of the present invention.

### DETAILED DESCRIPTION OF THE PREFERRED EMBODIMENT

A preferable embodiment according to the present invention is now described referring to the drawings. A video gaming machine as an example of a gaming machine according to the embodiment of the present invention is described as the video gaming machine utilizes an display device that shows various information such as image information useful for playing a game. Though the game may be played by utilizing bills, coins, medals, or tokens as gaming media with the gaming machine, it is presumed that bills and coins are utilized with the gaming machine as described below.

### Configuration of the gaming machine

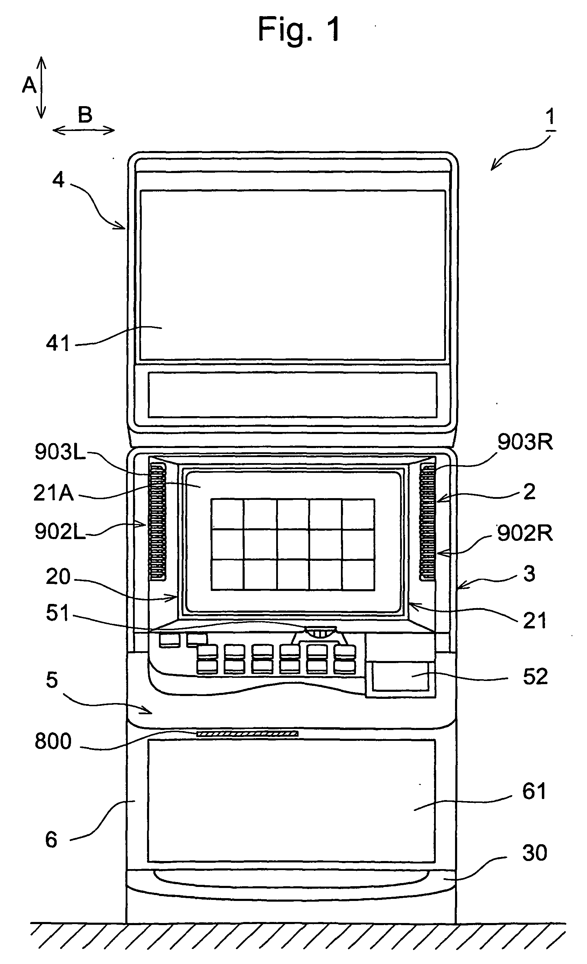

Fig. 1 shows a front view of a gaming machine 1. The gaming machine 1 has a door 3 to function as a front door hingedly mounted to a cabinet 2 so as to open and close. A top frame 4 is disposed on an upper part of the cabinet 2. A decorative panel 41 is provided at the front face of the top frame 4.

An display device 21, having a display screen 21A that shows an image concerning a game, is installed inside the cabinet 2. An opening 20 is formed at an upper part of the door 3 so as to show the image concerning the game that is actually shown on the display screen 21A of the display device 21. A transparent plate is disposed on the opening 20 so that the displayed image and other information on the display device 21 may be viewed and that the display device 21 may be protected. That is, the opening 20, through which the display screen 21A of the display device 21 may be viewed from the exterior or the outside, is formed on the front face of the cabinet 2.

Speakers are disposed inside the cabinet 2. The speakers are provided as sound generating devices that generate sound in accordance with the gaming situations as the game proceeds. On left and right sides of the opening 20 of the cabinet 2 are formed sound transmitting sections 902L, 902R for emitting sound such as voice, music, noise, and other kinds of sound to be heard readily, which are generated in accordance with the situations as the game proceeds. Each of the sound transmitting sections 902L, 902R is formed to have a vertically long shape that is longer in the vertical direction (see arrows A) than in the left-and-right direction (see arrow B) at a front face region of the cabinet 2. A plurality of speaker grills are formed in Bound transmitting sections 902L, 902R, respectively. That is, at the respective sides of the opening 20 of the cabinet 2 are formed speaker grills for emitting sound generated by the speakers to the exterior.

A control panel 5 is provided below the opening 20 so as to project from the front face. Various operating buttons are aligned on the control panel 5, and a coin insertion slot 51, for inserting coins, is provided behind the buttons and somewhat to the right side. Furthermore, on the right side of the control panel 5 is equipped a bill guide device 52 for guiding bills to a bill validator provided inside the cabinet 2.

A display window 800 for displaying a plurality of counters (not shown) with display sections showing numerals that change as the game proceeds is provided at a lower part of a base portion that forms the control panel 5. Thus, values indicated in the counters installed inside the cabinet 2 are displayed directly so that a manager or the like of the gaming place may view them without opening the door 3 and the like of the gaming machine 1.

Since the counters are installed at this position, the numerical values of the counters are difficult to be seen by a player, but they can be seen by the manager of the gaming place without opening the door 3 of the gaming machine.

Although the counters in this embodiment are installed at a position where they can be viewed through a display window 800 provided below the base portion, the present invention is not limited thereto and other embodiments are possible. For example, the counters are preferably installed at a position where the player cannot see them easily. They may be installed at a position where they can be viewed only when the door 3 or the like of the gaming machine is opened.

A lower frame 6 connected to the door 3 being capable of opening and closing is provided below the control panel 5. A decorative panel 61 is enclosed in the lower frame 6. Designs and decorations indicating the model of the gaming machine, and so on are drawn on the decorative panel 61.

Though in this embodiment, the designs and decorations indicating the model of the gaming machine, and so on are drawn on the decorative panels 41 and 61, the present invention is not limited thereto. For example, the designs and decorations showing a description of the method of playing the game with the gaming machine, or other notifications to the player, or just patterns without any meaning, and so on may be drawn on the decorative panel 41.

A coin tray 30 for receiving coins is formed below the lower frame 6. When coins are paid out as a result of the game, which is displayed on the above-mentioned display device 21, the coins being ejected from inside the cabinet 2 are collected here.

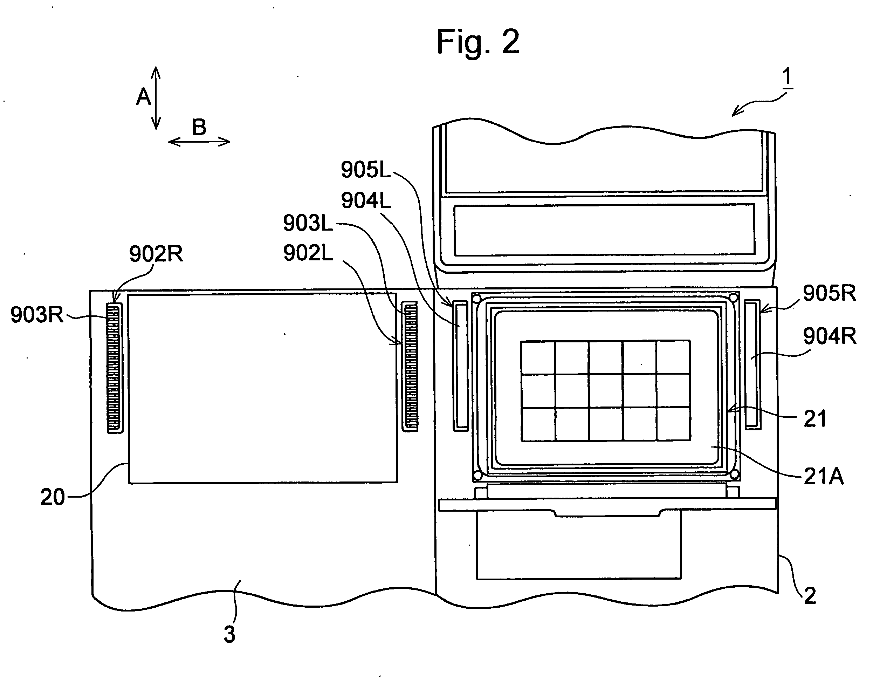

Fig. 2 is an enlarged front view showing the display device 21 in an enlarged.manner as the door 3 of the gaming machine 1 is opened.

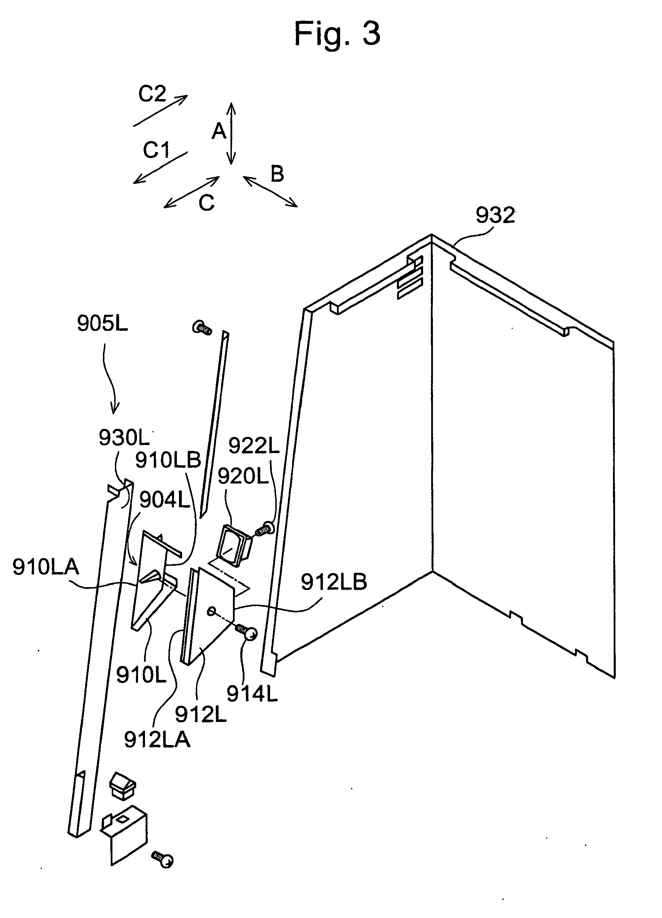

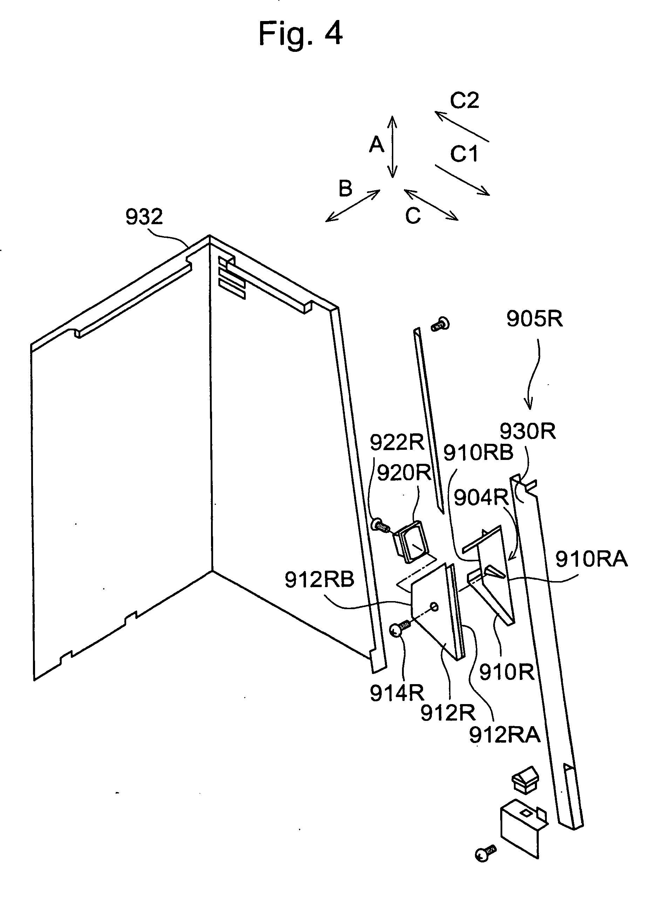

The display device 21 is provided inside the cabinet 2. At the respective sides of display device 21 are disposed sound guiders 905L and 905R for guiding generated sound towards the speaker grills respectively. These sound guiders 905L and 905R are provided with sound transmitting passages 904L and 904R for transmitting the generated sound towards the speaker grills, respectively. The sound is generated by speaker main bodies 920L and 920R (see Figs. 3 and 4) that are provided at the back ends of the sound guiders 905L and 905R, respectively. That is, on respective sides of the display device 21 inside the cabinet 2 are disposed sound guiders 905L and 905R having sound transmitting passages 904L and 904R for transmitting sound generated by the respective speakers to the respective speaker grills

With this configuration, since sound generated by the speaker main bodies 920L, 920R can be transmitted to the front without installing such speaker main bodies near the front face of the cabinet 2, the gaming machine may be designed without considering bulky speaker main bodies or the size of the display device 21 may not be caused to be smaller because of oversized speaker main bodies. The speaker main bodies may not have to be downsized, either.

The opening 20 is formed in the door 3 so that the display device 21 is viewed through the opening 20 when the door 3 is closed at the front face of the cabinet 2. As mentioned above, the transparent plate is mounted to the opening 20. Thus, when the door 3 is closed, the display screen 21A of display device 21 is visible from the outside.

Also, the sound transmitting sections 902L and 902R to be connected to the respective transmitting holes 903L and 903R which are the respective front ends of the sound transmitting passages 904L and 904R are positioned on the respective sides of the opening 20 when the door 3 is closed over the front face of the cabinet 2. Thus, even when the door 3 is closed, the sound being generated by the speaker main bodies 920L and 920R (see Figs. 3 and 4) and traveling through the sound transmitting passages 904L and 904R is emitted to the outside of the gaming machine 1 so that the sound may be heard readily for realizing a very lively audio attraction.

### Configuration of the sound transmitting passage

Fig. 3 is an exploded perspective assembly diagram showing the structures of sound guider 905L and other parts constituting the sound transmitting passage 904L on the left side of the display device 21.

The sound guider 905L mainly comprises a left face guide member 910L and a right face guide member 912L. At least either left face guide member 910L or right face guide member 912L (in Fig. 3, the left face guide member 910L) has plate portions, which cover a top face and a bottom face of the sound transmitting passage 904L. The left face guide member 910L and the right face guide member 912L are assembled together to form a hollow quadratic prism with front and back openings in the front/rear direction (see arrow C). Thus, the sound transmitting passage 904L is formed such that sound generated by the speaker main body 920L being positioned at the back opening is transmitted to the player standing in front of the gaming machine 1.

Since the top and bottom face plates of the above-mentioned sound guider 905L are made narrow in the width direction (arrow B), the sound transmitting passage 904L can be made to have a shape that is long in the vertical direction (arrow A) and narrow in the horizontal direction (arrow B). Thus, even when the sound guider 905L is installed on the left side of the display device 21, the width of the display screen 21A of the display device 21 can maintain an adequate width in consideration of the gaming machine width so that the player may view the gaming situations for playing the game.

Furthermore, both left and right face guide members 910L, 912L are shaped similarly such that the vertical length in the vertical direction (arrow A) increases frontward along the direction (arrow C1) from the back opening adjacent to the speaker main body 920L of the gaming machine 1. The distance between the left face and right guide members 910L, 912L is substantially constant along the direction (arrow C1) from the back opening adjacent to the speaker main body 920L of the gaming machine 1. That is, both left and right face guide members 910L, 912L have a trapezoidal shape in the side view. The sound guider 905L is arranged such that longer side edges of left and right face guide members 910LA and 912LA in the trapezoidal shape are positioned to face the front (arrow C1) and that shorter side edges left and right face guide members 910LB and 912LB in the trapezoidal shape are positioned to face the back (arrow C2).

With such a shape of the sound guider 905L, the size of the display device 21 may not be affected and sound generated by the speaker main body can be guided frontward for emitting from the speaker grill that has an enlarged projection area.

The above-described left and right face guide members 910L, 912L are assembled together with a guide fixing screw 914L. Furthermore, the speaker main body 920L is fitted in and fixed with a speaker fixing screw 922L to the back opening positioned at the back end of the sound transmitting passage 904L.

Also, the right face guide members 910L and the speaker main body 920L are fixed to a fixing side frame 930L inside the cabinet 2. The fixing side frame 930L is fixed to a cabinet side plate 932 that is in turn fixed to the cabinet 2.

Also as shown in Fig. 4, a sound guider 905R is arranged in a symmetrical manner with respect to the sound guider 905L. The sound guider 905R thus has the same function as the sound guider 905L. The parts of the sound guider 905R are similar to those of the sound guider 905L. Therefore, the same numerical number and "R" are designated to the counter part. Therefore, a similar description for the assembly is omitted.

### Function of the speakers

The speaker main bodies 920L and 920R are electrically connected to a sub-control board (not shown) for attractions, which is disposed inside the cabinet 2. This sub-control board functioning as an attraction control unit is also electrically connected to the display device 21 and decorative lamps (not shown). This sub-control board controls all attractions including notifications to the player, or else.

The sub-control board is electrically connected to a main control board functioning as a control unit that is provided inside the cabinet 2 and controls the main body of the gaming machine 1. The main control board is also electrically connected to the various switches provided on the control panel 5, a coin sensor for detecting coins inserted into the coin insertion slot 51, a bill sensor for detecting bills inserted into a bill insertion slot, a hopper for paying out coins, and so on.

Upon receiving a signal indicating that a switch among the various switches has been pressed, or upon receiving, from the coin sensor, a signal indicating that a coin has been inserted, the main control board sends a signal, indicating the performing of the corresponding operation, to the sub-control board. The main control board also sends a signal indicating the result of the game controlled by the main control board to the sub-control board.

Upon receiving the above-mentioned signal, the sub-control board selects an audio attraction suited for the contents indicated by the signal from among the audio data stored in a built-in ROM. Then, the sub-control board converts the selected audio data into audio signals and sends the audio signals to the speaker main bodies 920L and 920R.

Thus, the speaker main bodies 920L and 920R can emit sound matching the game contents shown on the display device 21 or the operation by the player at an appropriate timing.

The sound generated by the speaker main bodies 920L and 920R are guided through the sound transmitting passages 904L and 904R in a horizontally thin but vertically long shape being positioned on the respective sides of the display device 21 to the sound transmitting sections 902L and 902R in a vertically long shape that are provided on the door 3. Thus, the sound reaches the player's ears.

As described above, there are some aspects according to the present invention and other aspects according to the present invention may exist although the present specification may not specify them.

In an aspect according to the present invention, since the sound guiders with the sound transmitting passages for guiding and transmitting sound from the sound generating devices to the speaker grills are provided on both sides of the display device being disposed inside the cabinet, sound can be heard readily and very lively audio attractions can be achieved.

Also, Since the transmitting holes 903L and 903R being disposed on the front face regions (for example, sound transmitting sections 902L and 902R) of the cabinet 2 are shaped long in the vertical direction (arrow A) and short in the horizontal direction (arrow B), the speaker grills may be provided in the front face regions horizontally narrow and long in the vertical direction (arrow A). Thus, even when the speakers or the speaker grills are installed on both sides of the display device such as a monitor the width of the display device may be adequate for showing the gaming situations as the game proceeds.

Furthermore, since each of the sound transmitting passages is formed with a substantially constant width in the horizontal direction (arrow B) and an increasing length in the vertical direction (arrow A) from each of the sound generating devices to each of the speaker grills as the sound traveling according to arrow C1, the sound generated by the sound generating devices can be emitted towards the front through the speaker grills that are enlarged efficiently.

## Claims

1. A gaming machine (1) comprising:
a display device (21) having a display screen (21 A) showing an image concerning a game;
sound generating devices (920L; 920R) generating sound according to the game; a cabinet (2) having an opening (20) on a front face thereof such that the display screen (21A) of the display device (21) is viewed through the opening (20) from an outside of the cabinet (2);
**characterized in that** the display device (21) and the sound generating devices (920L, 920R) are integrated in the cabinet (2), wherein the sound generating devices (920L, 920R) are spaced apart from the front face of the cabinet (2), the front face comprises sound transmitting holes (903L, 903R) being disposed on the left and right side of the display device (21) for emitting sound generated by the sound generating devices (920L, 920R); sound transmitting passages (904L, 904R) are incorporated in the cabinet (2) extending from the respective sound generating devices (920L, 920R) to the sound transmitting holes (903L, 903R) for guiding the sound, wherein the sound transmitting passage (904L, 904R) is formed and enclosed by one or more plates (910L, 912L, 910R, 912R), at least one plate is fixed to the cabinet (2).

2. The gaming machine according to claim 1, wherein the sound transmitting holes (903L, 903R) are disposed in sound transmitting sections (902L, 902R), each of which has a vertically long shape, and the sound transmitting sections (902L, 902R) are provided on the left and right sides of the opening (20) on the front face of the cabinet (2).

3. The gaming machine according to claim 1 or 2, wherein each of the sound transmitting passages (904L, 904R) comprises a substantially constant width in a horizontal direction (B) and an increasing length in a vertical direction (A) as the each of the sound transmitting passages (904L, 904R) extends towards each of the sound transmitting holes (903L, 903R).

4. The gaming machine according to any one of claims 1 to 3, wherein the sound transmitting passage (904L, 904R) has a trapezoidal section in vertical direction (C) from the sound generating devices (920L, 920R) to front face.

## Patentansprüche

1. Spielautomat (1), der umfasst:
eine Anzeigevorrichtung (21) mit einem Anzeigeschirm (21A), der ein ein Spiel betreffendes Bild zeigt;
Schallerzeugungsvorrichtungen (920L; 920R) zum Erzeugen von Schall entsprechend dem Spiel; ein Gehäuse (2) mit einer Öffnung (20) in seiner Vorderseite, derart, dass der Anzeigeschirm (21A) der Anzeigevorrichtung (21) von außerhalb des Gehäuses durch die Öffnung (20) betrachtet wird;
**dadurch gekennzeichnet, dass** die Anzeigevorrichtung (21) und die Schallerzeugungsvorrichtungen (920L, 920R) in das Gehäuse (2) integriert sind,
wobei die Schallerzeugungsvorrichtungen (920L, 920R) von der Vorderseite des Gehäuses (2) beabstandet sind, wobei die Vorderseite Schalldurchlasslöcher (903L, 903R) aufweist, die auf der linken bzw. der rechten Seite der Anzeigevorrichtung (21) angeordnet sind, um durch die Schallerzeugungsvorrichtungen (920L, 920R) erzeugten Schall auszusenden; Schalldurchlasskanäle (904L, 904R) in das Gehäuse (2) eingebaut sind und sich von den jeweiligen Schallerzeugungsvorrichtungen (920L, 920R) zu den Schalldurchlasslöchern (903L, 903R) erstrecken, um den Schall zu leiten, wobei der Schalldurchlasskanal (904L, 904R) durch eine oder mehrere Platten (910L, 912L, 910R, 912R) gebildet und umschlossen ist, wobei wenigstens eine Platte an dem Gehäuse (2) befestigt ist.

2. Spielautomat nach Anspruch 1, wobei die Schalldurchlasslöcher (903L, 903R) in Schalldurchlassabschnitten (902L, 902R) angeordnet sind, wovon jeder eine vertikal längliche Form besitzt, und die Schalldurchlassabschnitte (902L, 902R) auf der linken bzw. rechten Seite der Öffnung (20) in der Vorderseite des Gehäuses (2) vorgesehen sind.

3. Spielautomat nach Anspruch 1 oder 2, wobei jeder der Schalldurchlasskanäle (904L, 904R) auf seiner Erstreckung zu jedem der Schalldurchlasslöcher (903L, 903R) eine im Wesentlichen konstante Breite in horizontaler Richtung (B) und eine zunehmende Länge in vertikaler Richtung (A) aufweist.

4. Spielautomat nach einem der Ansprüche 1 bis 3, wobei der Schalldurchlasskanal (904L, 904R) in vertikaler Richtung (C) von den Schallerzeugungsvorrichtungen (920L, 920R) zu der Vorderseite einen trapezförmigen Querschnitt hat.

## Revendications

1. Une machine de jeu (1) comprenant :
un dispositif d'affichage (21) ayant un écran d'affichage (21 A) affichant une image concernant un jeu ;
des dispositifs de génération de son (920L, 920R) qui génèrent du son en correspondance au jeu ;
un boîtier (2) présentant une ouverture (20) sur sa face frontale de sorte que l'écran d'affichage (21A) du dispositif d'affichage (21) est visualisé à travers l'ouverture (20) à partir de l'extérieur du boîtier (2) ;
**caractérisée en ce que** le dispositif d'affichage (21) et les dispositifs de génération de son (920L, 920R) sont intégrés dans le boîtier (2) dans lequel les dispositifs de génération de son (920L, 920R) sont espacés par rapport à la face frontale du boîtier (2), la face frontale comprend des orifices de transmission de son (903L, 903R) disposés du côté gauche et du côté droit du dispositif d'affichage (21) pour émettre le son généré par les dispositifs de génération de son (920L, 920R) ; des passages de transmission de son (904L, 904R) sont incorporés dans le boîtier (2) s'étendant à partir du dispositif de génération de son respectif (920L, 920R) vers les orifices de transmission de son (903L, 903R) pour guider le son, le passage de transmission de son (904L, 904R) étant formé et entouré par une ou plusieurs plaques (910L, 912L, 910R, 912R), au moins une plaque étant fixée au boîtier (2).

2. La machine de jeu selon la revendication 1, dans laquelle les orifices de transmission de son (903L, 903R) sont disposés dans des parties de transmission de son (902L, 902R), dont chacune présente une forme allongée dans le sens vertical, et les parties de transmission de son (902L, 902R) sont prévues sur les côtés gauche et droit de l'ouverture (20) sur la face frontale du boîtier (2).

3. La machine de jeu selon la revendication 1 ou 2, dans laquelle chacun des passages de transmission de son (904L, 904R) comprend une largeur sensiblement constante selon une direction horizontale (B) et une longueur qui augmente selon une direction verticale (A) à mesure que chacun des passages de transmission de son (904L, 904R) s'étend vers chacune des orifices de transmission de son (903L, 903R).

4. La machine de jeu selon l'une quelconque des revendications 1 à 3, dans laquelle le passage de transmission de son (904L, 904R) présente une section trapézoïdale selon la direction verticale (C) à partir du dispositif de génération de son (920L, 920R) vers la face frontale.
